Europäisches Patentamt

European Patent Office

Office européen des brevets

(19)

(11) Veröffentlichungsnummer: **0 176 059 B1**

(12) **EUROPÄISCHE PATENTSCHRIFT**

(45) Veröffentlichungstag der Patentschrift: **27.11.91**

(21) Anmeldenummer: **85111968.5**

(22) Anmeldetag: **21.09.85**

(51) Int. Cl.⁵: **C09B 69/06, C09B 67/18,
C09B 67/10, C09D 11/02**

(54) **Verfahren zur Herstellung von anwendungstechnisch verbesserten Verlackungsprodukten.**

(30) Priorität: **27.09.84 DE 3435433**

(43) Veröffentlichungstag der Anmeldung:
**02.04.86 Patentblatt 86/14**

(45) Bekanntmachung des Hinweises auf die
Patenterteilung:
**27.11.91 Patentblatt 91/48**

(84) Benannte Vertragsstaaten:
**BE CH DE FR GB IT LI**

(56) Entgegenhaltungen:
**DE-A- 1 717 196       DE-A- 2 614 257
FR-A- 1 538 270       FR-A- 2 006 384
FR-A- 2 476 668       US-A- 1 880 761
US-A- 2 079 548       US-A- 2 140 248**

(73) Patentinhaber: **BASF Aktiengesellschaft
Carl-Bosch-Strasse 38
W-6700 Ludwigshafen(DE)**

(72) Erfinder: **Jesse, Joachim, Dr.
Im Spiess 10
W-6714 Weisenheim(DE)**

**Beschreibung**

Die Verlackung von basischen Farbstoffen, vorzugsweise von Triphenylmethan- und Xanthenfarbstoffen, mit Heteropolysäuren auf der Basis Phosphor-, Woram-, Molybdän- und/oder Kieselsäure führt zu Pigmenten, die im großen Umfang zu Druckfarben verarbeitet werden.

Die Synthese dieser Pigmente ist in FIAT Final Report, Vol. III, Nr. 1313 beschrieben (vgl. auch DE-OS 27 07 972 und Industrial and Engineering Chemistry, H. 8. 1955, S. 1507 ff).

Die nach den Verfahren des Standes der Technik hergestellten Pigmente liefern beim Trocknen der wäßrigen Preßkuchen harte Agglomerate und Aggregate, weshalb es schwierig ist, aus diesen getrockneten Pigmenten Offsetdruckfarben herzustellen, die gut dispergierbar sind und die eine geringe Körnigkeit aufweisen.

Weiterhin zeigen Nitrocellulose enthaltende Druckfarben mit diesen Pigmenten auf Acetat- und Aluminiumfolie häufig einen ungenügenden Glanz und eine schlechte Lasur.

Aufgabe der vorliegenden Erfindung war es, kornweichere Verlackungsprodukte herzustellen, die in Druckfarben, insbesondere in Offsetdruckfarben und in Nitrocellulose enthaltenden Druckfarben leicht dispergierbar sind und verbesserten Glanz und bessere Lasur aufweisen.

Es wurde gefunden, daß man anwendungstechnisch verbesserte Verlackungsprodukte aus basischen Farbstoffen und Heteropolysäuren auf der Basis Phosphor-, Wolfram-, Molybdän- und/oder Kieselsäure durch Nachbehandeln der bei der Verlackung erhaltenen Rohpigmente in wäßriger Suspension in der Wärme erhält, wenn man vor, während oder nach der Verlackung dem wäßrigen Gemisch

(1) primäre, sekundäre oder tertiäre aliphatische Amine, die mindestens ein $C_{10}$- bis $C_{20}$-Alkyl und/oder $C_8$- bis $C_{20}$-Alkoxy-$C_2$- bis -$C_4$-alkyl tragen,

(2) N-$C_8$- bis $C_{20}$-Alkylamino-$C_2$- bis -$C_8$-alkansäuren,

(3) Diaryl- oder Triarylamine,

(4) saure oder neutrale Phosphorsäureester auf der Basis Fettalkohol, Fettalkoholalkoxylat, Polypropylenglykol, Polyethylenglykol oder Blockcopolymeren aus Propylenoxid und Ethylenoxid,

(5) Schwefelsäurehalbester auf der Basis von $C_{10}$- bis $C_{20}$-Fettalkoholen, Fettalkoholethylenoxidaddukten oder $C_5$- bis $C_{20}$-Alkylphenolethylenoxidaddukten,

(6) $C_8$- bis $C_{20}$-Alkan- oder Alkensulfonsäuren, $C_6$- bis $C_{20}$-Alkylbenzolsulfonsäuren oder Di-$C_6$- bis $C_{20}$-Alkylsulfimide,

(7) Ethylenoxidaddukte von $C_1$- bis $C_{20}$-Alkylphenolen, $C_8$- bis $C_{20}$-Alkanolen oder $C_{10}$- bis

$C_{20}$-Alkylaminen, wobei die Addukte mindestens 5 Ethylenoxidreste enthalten,

(8) Propylenglykole oder Blockcopolymere auf der Basis von Alkandiolen oder -polyolen mit 2 bis 8 C-Atomen mit Propylenoxid und Ethylenoxid,

(9) Naphthole oder $C_1$- bis $C_{20}$-Alkylphenole oder Gemische dieser Mittel zugibt und das Rohpigment in der wäßrigen Suspension bei pH 2 bis 5 auf Temperaturen von 50° bis 100° C erwärmt.

Das Pigment wird anschließend abgetrennt, gewaschen und getrocknet.

Die Verfahrensprodukte sind in Druckfarbenbindemittellösungen, insbesondere in Offsetdruckfarben leicht dispergierbar. Die Farben weisen eine geringe Körnigkeit und die mit diesen Farben erhältlichen Drucke weisen hohen Glanz und eine hohe Lasur auf.

Das Verfahren zur Herstellung der Verlackungsprodukte aus basischen Farbstoffen und Heteropolysäuren sowie die Herstellung der zur Verlackung erforderlichen Heteropolysäuren ist bekannt (FIAT, Final Report Vol. III 1313). Ebenso sind die Zur Herstellung von Verlackungsprodukten, die zum Pigmentieren von Lacken und Druckfarben geeignet sind, geeigneten basischen Farbstoffe bekannt (z.B. V. Oliver "Basic Dye Pigments (Permanent)" in: Pigment Handbook, Vol. I, S. 605/616 Wiley & Sons, New York, London (1973); FIAT Final Report l.c.).

Kern des Verfahrens gemäß der Erfindung ist, daß das bei der Umsetzung erhaltene Verlackungsprodukf - im folgenden auch als Rohpigment bezeichnet - in Form einer wäßrigen Suspension in Gegenwart der erfindungsgemäß anzuwendenden Mittel (1) bis (9) oder Gemischen davon im pH-Bereich von 2 bis 5 auf 50 bis 100° C erwärmt wird.

Die erfindungsgemäß anzuwendenden Mittel (1) bis (9) oder deren Gemische werden im folgenden auch als Additive bezeichnet.

Als Additive kommen für das Verfahren in Betracht:

(1) primäre, sekundäre oder tertiäre aliphatische Amine, die mindestens ein $C_{10}$- bis $C_{20}$-Alkyl und/oder $C_8$- bis $C_{20}$-Alkoxy-$C_2$- bis -$C_4$-alkyl tragen;

(2) N-$C_8$- bis $C_{20}$-Alkylamino-$C_2$- bis -$C_8$-alkansäuren;

(3) Diaryl- oder Triarylamine;

(4) saure und neutrale Phosphorsäureester auf der Basis von EO-Addukten und/oder PO/EO-Addukten an $C_3$- bis $C_{18}$-Alkanolen, von Polypropylenglykol, Polyethylenglykol und von Blockcopolymeren aus Ethylenoxid (EO) und Propylenoxid (PO);

(5) Schwefelsäurehalbester auf der Basis von $C_{10}$- bis $C_{20}$-Fettalkoholen und $C_5$- bis $C_{20}$-

Alkylphenol-EO-Addukten;

(6) $C_8$- bis $C_{20}$-Alkan- und Alkensulfonsäuren, $C_6$- bis $C_{20}$-Alkylbenzolsulfonsäuren und Di-$C_6$- bis $C_{20}$-Alkylsulfimide;

(7) Ethylenoxidaddukte von $C_1$- bis $C_{20}$-Alkylphenolen, von $C_8$- bis $C_{20}$-Alkanolen (Fettalkoholen) und von $C_{10}$- bis $C_{20}$-Alkylaminen, wobei die Addukte im Mittel mindestens 5 Mol EO je Mol enthalten;

(8) Propylenglykole, Blockcopolymere auf der Basis von Alkandiolen und Alkanpolyolen mit 3 bis 5 Hydroxylgruppen und 2 bis 8 C-Atomen mit PO und EO und EO-Addukten von $C_2$- bis $C_8$-Alkandiolen und $C_2$- bis $C_8$-Alkanpolyolen mit 3 bis 5 Hydroxylgruppen;

(9) Naphthole und Alkylphenole

oder Gemisch dieser Mittel.

Im einzelnen sind als Additive z.B. zu nennen:

(1) a) primäre Amine: Decylamin, Dodecylamin, Tridecylamin, Tetradecylamin, Hexadecylamin, Octadecylamin, 2-Octoxyethylamin, 3-Octoxypropylamin, 3(2'-Ethylhexoxy)-propylamin, 3-Decoxypropylamin, 3-Dodecoxypropylamin, 3-Tetradecoxypropylamin, 3-Octadecoxypropylamin, 3-Hexadecoxypropylamin und die entsprechenden 2-Alkoxyethylamine, Talgfettamin, Cocosfettamin, Sojaamin;

(1) b) sekundäre und tertiäre Amine: vorzugsweise Mono-N- und Di-N,N-$C_1$- bis -$C_4$-Alkyl-N-$C_{10}$- bis -$C_{20}$-alkylamine oder N-($C_8$- bis -$C_{20}$-alkoxy-$C_2$- bis -$C_4$-alkyl)-amine: N-Methyloctadecylamin, N,N-Dimethyloctadecylamin, N,N-Diethyloctadecylamin, N,N-Di-propyloctadecylamin, N,N-Dimethylhexadecylamin, N,N-Dimethyltetradecylamin, N,N-Dimethyl-dodecylamin, N,N-Dimethyl-3-octadecoxypropylamin, N,N-Diethyl-3-octadecoxypropylamin, N,N-Dibutyl-3-octadecoxypropylamin, N,N-Dimethyl-3-hexadecoxypropylamin, N,N-Dimethyl-3-tetradecoxypropylamin, N,N-Dimethyl-3-dodecoxypropylamin, N,N-Dimethyl-3-decoxypropylamin, N,N-Dimethyl-3-octoxypropylamin, N,N-Dimethyl-3-(2'-ethylhexoxy)-propylamin oder technische Gemische wie Dicocosfettamin.

(2) Alkylaminoalkansäuren: vorzugsweise N-$C_8$- bis $C_{18}$-Alkylaminobuttersäuren wie N-$C_{18}$-Alkylaminobuttersäure, N-$C_{16}$-Alkylaminobuttersäure, N-Cocosfett-$\beta$-aminobuttersäure, N-$C_{14}$-Alkylaminobuttersäure, N-$C_{12}$-Alkylaminobuttersäure, N-$C_{10}$-Alkylaminobuttersäure, N-$C_8$-Alkylaminobuttersäure.

(3) Diaryl- und Triarylamine: Diphenylamin, N-Methyldiphenylamin, N-Ethyldiphenylamin, N-4-Methylphenylanilin, N-4-Methoxyphenylanilin, Triphenylamin, N-Phenyl-naphthylamin.

(4) a) Neutrale Phosphorsäureester: Tri-$C_3$- bis $C_{18}$-alkylphosphate, wie Tri-n-propylphosphat, Tributylphosphat, Trihexylphosphat, Trioctylphosphat, Trinonylphosphat, Tridecylphosphat, Tridodecylphosphat, Tritetradecylphosphat, Trihexadecylphosphat und Trioctadecylphosphat, wobei diese Ester vorzugsweise zusammen mit nichtionischen Hilfsmitteln (7) angewendet werden.

(4) b) Saure Phosphorsäureester auf der Basis Oxoalkohol-Fettalkohol-alkoxylate wie Fettalkohol-EO- und -PO/EO-Addukte, Polypropylenglykol, Polyethylenglykol und PO/EO-Blockcopolymeren: Mono- und Diester der Phosphorsäure mit Umsetzungsprodukten von $C_8$- bis $C_{20}$-Alkanolen mit EO, PO oder PO+EO wie $C_8$- bis $C_{12}$-Oxoalkohole (Gemisch) mit 2 bis 50, vorzugsweise 2 bis 20 Mol EO je Mol Alkohol, Dodecanol + 3 bis 5 EO, n- und i-Decanol + 3 bis 5 EO, $C_{12}$-$C_{16}$-Alkanolgemische + 3 bis 20 EO, $C_{16}$-Alkanol mit 3 bis 20 EO: Stearylalkohol + 3 bis 20 EO, Myristylalkohol + 3 bis 20 EO, Cocosfettalkohol + 3 bis 20 EO; $C_8$- bis $C_{12}$-Oxoalkohol + 3 bis 20 PO; $C_{11}$- bis $C_{16}$-Alkanolgemisch + 3 bis 20 PO; $C_8$- bis $C_{12}$-Oxoalkoholgemisch + 3 bis 10 PO und dann + 5 bis 25 EO; $C_{13}$- bis $C_{15}$-Oxoalkoholgemisch + 3 bis 10 PO und dann mit 5 bis 25 EO; n- und i-Decanol + 3 bis 10 PO + 5 bis 25 EO; Dodecanol + 3 bis 10 PO + 5 bis 25 EO; $C_{16}$-Fettalkohol + 3 bis 10 PO + 5 bis 25 EO; Myristylalkohol + 3 bis 10 PO + 5 bis 25 EO; Cocosfettalkohol + 3 bis 10 PO + 5 bis 25 EO, Stearylalkohol + 3 bis 10 PO + 5 bis 25 EO.

Die sauren Phosphorsäureester enthalten 1 oder 2 dieser Reste und sind in der Regel Gemische aus den Mono- und Diestern.

(5) Schwefelsäurehalbester von Fettalkoholen mit 10 bis 20 C-Atomen, von EO-Addukten dieser Fettalkohole und von $C_5$- bis $C_{20}$-Alkylphenol-EO-Addukten: Stearylalkoholsulfat, Palmitinalkoholsulfat, $C_{11}$- bis $C_{13}$-Alkanolsulfate, Cocosfettalkoholsulfat, Dodecylalkoholsulfat, $C_{13}$- bis $C_{15}$-Fettalkoholsulfat, Schwefelsäurehalbester von $C_{12}$- bis $C_{14}$-Fettalkohol + 2 bis 10 (insbesondere 2 bis 6) EO, Stearylalkohol + 2 bis 6 EO, Palmitinalkohol + 2 bis 6 EO, Cocosfettalkohol + 2 bis 10 EO, Dodecanol + 2 bis 10 EO, $C_{11}$- bis $C_{13}$-Oxoalkohol + 2 bis 6 EO, Schwefelsäurehalbester von Addukten von 2 bis 10 EO an Hexylphenol, n- und i-Octylphenol, i-Nonylphenol, Decylphenol, Dodecylphenol, Tetradecylphenol, Hexadecylphenol, Octadecylphenol und an Gemischen aus $C_8$/$C_{11}$-Alkylphenolen.

(6) Alkan- und Alkensulfonsäuren und Alkylbenzolsulfonsäuren: n- und i-Octansulfonsäure, Nonansulfonsäure, Decansulfonsäure, Dodecansulfonsäure, Tridecansulfonsäure, Tetradecansulfonsäure, Hexadecansulfonsäure, Octadecan-

sulfonsäure; Hexylbenzolsulfonsäure, Octylbenzolsulfonsäure, Nonylbenzolsulfonsäure, Decylbenzolsulfonsäure, Dodecylbenzolsulfonsäure, Tridecylbenzolsulfonsäure, Tetradecylbenzolsulfonsäure, Hexadecylbenzolsulfonsäure und Octadecylbenzolsulfonsäure.

(7) EO-Addukte an Alkylphenolen, Fettalkoholen und Alkylaminen:

    a) als Phenole sind z.B. zu nennen: Hexylphenol, i-Octylphenol, Nonylphenol, Decylphenol, Dodecylphenol, Tridecylphenol, Tetradecylphenol, Hexadecylphenol und Octadecylphenol mit 5 bis 60 Mol EO, vorzugsweise 5 bis 30 Mol EO je Mol Phenol;

    b) als Fettalkohole kommen z.B. in Betracht: Octanol, Nonanol, Decanol, Dodecanol, Tetradecanol, Tridecanol, Hexadecanol, Octadecanol, $C_8$- bis $C_{11}$-Oxoalkoholgemische, $C_{11}$- bis $C_{15}$-Oxoalkoholgemische, $C_{13}$- bis $C_{15}$-Oxoalkoholgemisch, Cocosfettalkohol, Stearylalkohol, Palmitinalkohol mit 5 bis 60 Mol EO, vorzugsweise 5 bis 25 Mol je Mol Alkohol.

(8) Polypropylenglykol und EO/PO-Blockcopolymere von Alkandiolen und Alkanpolyolen:

    a) Polypropylenglykol mit mittlerem Molgewicht von 500 bis 5.000;

    b) EO/PO-Blockcopolymere, die durch Umsetzen von Alkandiolen/Alkanpolyolen mit PO und dann mit EO erhalten werden. Als Alkandiole/-polyole sind z.B. zu nennen: Glykol, Propylenglykol, Butandiol-1,4, -1,2 oder -2,3; Hexandiol-1,6, Octandiol, Glycerin, Butantriol, Trimethylolpropan und Sorbit.

    Der EO-Gehalt kann zwischen 20 und 70 Gew.-%, bezogen auf das Polymere, liegen und das Molekulargewicht zwischen etwa 1.000 und 50.000.

(9) Naphthole und Alkylphenole: $\alpha$- und $\beta$-Naphthol, 3,4-Dimethylphenol, Hexylphenol, Octylphenol, Nonylphenol und Dodecylphenol.

Von den unter (1) bis (9) genannten Mitteln sind die der Gruppen (1), (2), (4), (5), (6) und (7) bevorzugt.

Von diesen sind besonders hervorzuheben:

(1.1) $C_{10}$- bis $C_{20}$-Alkylamine, N-$C_1$- bis $C_4$-Alkyl-N-$C_{10}$- bis $C_{20}$-Alkylamine, Di-N,N-$C_1$- bis $C_4$-alkyl-N-$C_{10}$- bis $C_{20}$-Alkylamine; $C_8$- bis $C_{18}$-Alkoxy-propylamine, Di-N,N-$C_1$- bis $C_4$-alkyl-N-$C_8$- bis $C_{18}$-alkoxypropylamine;

(2.1) N-$C_{10}$- bis $C_{20}$Alkylamino-$C_2$- bis $C_8$-alkansäuren, insbesondere die N-$C_{10}$- bis $C_{20}$-Alkylaminobuttersäuren;

(4.1) a) neutrale Phosphorsäureester von $C_3$- bis $C_{18}$-Alkanolen im Gemisch mit nichtionischen EO-Addukten aus der Gruppe (7) bzw. (7.1);

(4.1) b) saure Phosphorsäureester auf der Basis von EO- oder von PO-EO-Addukten an $C_{10}$- bis $C_{20}$-Alkanolen;

(5.1) Schwefelsäurehalbester von EO-Addukten an $C_{10}$- bis $C_{20}$-Alkanolen oder an $C_6$- bis $C_{20}$-Alkylphenolen mit 2 bis 6 Mol EO je Mol;

(6.1) $C_8$- bis $C_{20}$-Alkylbenzolsulfonsäuren;

(7.1) EO-Addukte an $C_6$- bis $C_{20}$-Alkylphenolen und $C_8$- bis $C_{20}$-Alkanolen mit 7 bis 55 Mol EO je Mol Phenol bzw. Alkanol;

(9.1) die unter (9) genannten Phenole und Naphthole.

Weiterhin sind hervorzuheben:

(10) Gemische aus sauren Phosphorsäureestern der Gruppe (4 b), vor allem (4.1 b), mit Aminen der Gruppe (1), insbesondere der Gruppe (1.1) und

(11) Gemische aus Alkylbenzolsulfonsäuren der Gruppe (6), vor allem der Gruppe (6.1), mit Aminen der Gruppe (1), insbesondere der Gruppe (1.1).

Besonders bevorzugt sind:

(1.2) $C_{14}$- bis $C_{20}$-Alkylamine, 3-($C_{10}$- bis $C_{20}$-Alkoxy)-propylamine, wobei die N-Atome der Amine gegebenenfalls durch $C_1$- bis $C_4$-Alkyl, vorzugsweise durch Methyl oder Ethyl ein- oder zweifach substituiert sind, insbesondere Stearylamin und Di-$C_1$- bis $C_4$-alkyl-stearylamine wie N,N-Dimethyl- und N,N-Diethylstearylamin sowie die unter (2.1), (4.1), (5.1), (6.1), (7.1), (9) und (10) genannten Mittel.

Die Mengen an Additiv (1) bis (11) liegen bei 5 bis 50 Gew.-%, vorzugsweise bei 10 bis 45 Gew.-%, bezogen auf die Menge des zur Verlackung angewendeten basischen Farbstoffs.

Besonders gute Ergebnisse werden mit Mengen von 15 bis 40 Gew.-%, bezogen auf verwendeten basischen Farbstoff, an Additiv erhalten.

Die Additive können vor der Verlackung, z.B. der Lösung des basischen Farbstoffs oder der Lösung der Heteropolysäure, während der Verlackung getrennt von der Heteropolysäure oder nach der Verlackung der Suspension des Verlackungsprodukts zugegeben werden. Vorteilhafterweise werden die Additive in Form einer wäßrigen Lösung oder Suspension angewendet.

Die Nachbehandlung des Rohpigments (Verlackungsproduktes) erfolgt im pH-Bereich von 2 bis 5, vorzugsweise im pH-Bereich von 2,2 bis 4 und bei Temperaturen von 50 bis 100° C, vorzugsweise von 75 bis 95° C.

Die Dauer der Nachbehandlung liegt in der Regel zwischen 10 und 120 Minuten, vorzugsweise bei 30 bis 60 Minuten.

Die Menge an Additiv wie auch die Dauer und die Temperatur bei der Nachbehandlung sind von den Verlackungsprodukten abhängig. Die optimalen Mengen an Additiv können ebenso wie die günstigste Temperatur durch einfache Reihenversuche ermittelt werden.

Das Verfahren gemäß der vorliegenden Erfindung soll durch die folgenden Beispiele weiter erläutert werden. Die Teile sind Gewichtsteile und die Prozentangaben beziehen sich auf das Gewicht.

EO = Ethylenoxid
PO = Propylenoxid

### Beispiel 1

Eine wäßrige Lösung von 38,6 Teilen C.I. Basic Blue 7, C.I. Nr. 42 595 in 2700 Teilen Wasser wurde mit einer in bekannter Weise hergestellten Phosphormolybdänsäurelösung aus 27,0 Teilen Molybdänoxid und 2,55 Teilen Dinatriumphosphat in 255 Teilen Wasser versetzt, worauf das Pigment ausfiel. Dieser Suspension wurden 4,9 Teile eines sauren Phosphorsäureesters zugegeben, der als Estergruppe ein Umsetzungsprodukt eines $C_{13}$- bis $C_{15}$-Oxoalkoholgemisches mit 6 Mol PO und dann mit 12 Mol EO je Mol Alkohol enthält. Nach einer Stunde Rühren bei 75°C wurden der Pigmentsuspension entsprechend den Angaben in der DE-OS 27 07 972 1,74 Teile Ethylendiamintetraessigsäure/Natriumsalz und 8,3 Teile einer Emulsion, die aus 0,53 Teilen Ölsäureethanolamid, 1,13 Teilen Normalparaffin $C_{13}$ - $C_{15}$ und 6,64 Teilen Wasser bei 60°C hergestellt wurde, zugegeben. Die Suspension wurde eine weitere Stunde gerührt, dann wurde das Pigment isoliert und bei 75°C im Umluftschrank getrocknet. Nach dem Mahlen erhält man ein dispergierweiches Pigment, das bei der Einarbeitung in einen Offsetfirnis eine Druckfarbe mit einer besseren Kornfeinheit und einer höheren Fließfähigkeit als das nach Vergleichsbeispiel 1 hergestellte Pigment liefert. Beim Anreiben des erstgenannten Pigments in einem Nitrolack (14 Teile Nitrocellulose und 3,5 Teile Phthalsäure-di-n-butylester gelöst in 20 Teilen Essigester und 62,5 Teilen Ethanol) erhält man eine Druckfarbe, die auf Aluminium- bzw. Acetatfolie Färbungen mit höherem Glanz und höherer Lasur liefert als eine Farbe, die das Pigment des Vergleichsbeispiels 1 enthält.

### Vergleichsbeispiel 1

Eine wäßrige Lösung von 38,6 Teilen C.I. Basic Blue 7, C.I. Nr. 42 595, in 2700 Teilen Wasser wurde mit einer in bekannter Weise hergestellten wäßrigen Heteropolysäurelösung aus 27,0 Teilen Molybdänoxid und 2,55 Teilen Dinatriumphosphat in 255 Teilen Wasser verlackt. Die Pigmentsuspension wurde 15 Minuten nachgerührt und mit 1,74 Teilen Ethylendiamintetraessigsäure/Natriumsalz und 8,3 Teilen einer Emulsion, die aus 0,53 Teilen Ölsäureethanolamid, 1,13 Teilen Normalparaffin $C_{13}$- $C_{15}$ und 6,64 Teilen Wasser bei 60°C hergestellt wurde, versetzt. Das Pigment wurde nach einer Stunde Rühren isoliert, bei 75°C im Umluftschrank getrocknet und gemahlen.

### Beispiel 2

Beispiel 1 wurde wiederholt, jedoch wurden anstelle des dort genannten sauren Phosphorsäureesters ein Gemisch aus 3,9 Teilen Triisobutylphosphat, 1,25 Teilen des Anlagerungsproduktes von 20 Mol EO an 1 Mol i-Nonylphenol und 0,29 Teilen des Anlagerungsproduktes von 5 Mol EO an 1 Mol i-Decanol verwendet. Es resultierte ein Pigment, das praktisch die gleichen Eigenschaften wie das nach Beispiel 1 hergestellte Pigment aufweist.

### Beispiel 3

Es wurde wie in Beispiel 2 verfahren, jedoch wurde zur Verlackung eine in bekannter Weise hergestellte Heteropolysäurelösung aus 80,7 Teilen Molybdänoxid, 186,5 Teilen Wolframoxid und 27,6 Teilen Dinatriumphosphat in 1200 Teilen Wasser verwendet. Es wurde ein Pigment erhalten, das gegenüber dem nach der DE-OS 27 07 972, Beispiel 3 erhaltenen Produkt in Offset- und in Nitrocellulose enthaltenden Farben die in Beispiel 1 angegebenen anwendungstechnischen Vorteile aufweist.

### Beispiel 4

Es wurde wie in Beispiel 1 verfahren, jedoch wurden 35,9 Teile C.I. Basic Green 1, C.I. Nr. 42 040, anstelle von C.I. Basic Blue 7 mit Phosphormolybdänsäure verlackt. Man erhielt ein Pigment, das gegenüber dem Pigment des Vergleichsbeispiels 2 in Offset- und in Nitrocellulose enthaltenden Druckfarben die in Beispiel 1 beschriebenen anwendungstechnischen Vorteile aufweist.

### Vergleichsbeispiel 2

35,9 g C.I. Basic Green 1, C.I. Nr. 42 040, wurden anstelle von C.I. Basic Blue 7 wie in Vergleichsbeispiel 1 verlackt.

### Beispiel 5

Eine Lösung von 38 Teilen Basic Violet 1, C.I. Nr. 42 535, in 2800 Teilen Wasser wurden mit einer in bekannter Weise hergestellten Heteropolysäurelösung aus 33,2 Teilen Molybdänoxid und 3,14 Teilen Dinatriumphosphat in 320 Teilen Wasser versetzt, worauf das Pigment ausfiel. Dieser Suspension wurden 10 Teile eines sauren Phosphorsäureesters zugesetzt, der als Estergruppe ein Umsetzungsprodukt eines $C_{13}$- bis $C_{15}$-Oxoalkoholgemisches mit 6 Mol PO und dann mit 12 Mol EO je Mol Alkohol enthält. Nach einer Stunde Rühren bei 80°C wurden der Pigmentsuspension entsprechend den Angaben in der DE-OS 27 07 972 2 Teile Ethylendiamintetraessigsäure/Natriumsalz und 16 Teile einer Emulsion, die aus 1,02 Teilen Ölsäureethanolamid, 2,18 Teilen Normalparaffin $C_{13}$- $C_{15}$ und 12,8 Teilen Wasser bei 60°C hergestellt wurde, zugegeben. Nach einer weiteren Stunde Nachrührzeit wurde das Pigment isoliert und bei 75°C im Umluftschrank getrocknet. Das nach diesem Verfahren hergestellte Pigment weist gegenüber dem des Vergleichsbeispiels 3 die in Beispiel 1 angegebenen anwendungstechnischen Vorteile auf.

## Vergleichsbeispiel 3

Eine wäßrige Lösung von 38 Teilen C.I. Basic Violet 1, C.I. Nr. 42 535, in 2800 Teilen Wasser wurde mit einer Phosphormolybdänsäurelösung gemäß Beispiel 5 versetzt, worauf das Pigment ausfiel. Anschließend wurden, wie in Beispiel 5 beschrieben, 2 Teile Ethylendiamintetraessigsäure/Natriumsalz und 16 Teile Emulsion zugegeben. Die Suspension wurde eine Stunde bei 80°C gerührt, das Pigment anschließend isoliert und bei 75°C im Umluftschrank getrocknet.

## Vergleichsbeispiel 4

Vergleichsbeispiel 3 wurde wiederholt, die Pigmentsuspension wurde jedoch eine Stunde bei 90°C statt bei 80°C gerührt.

## Vergleichsbeispiel 5

Es wurde wie im Vergleichsbeispiel 3 verfahren, jedoch wurden 38 Teile C.I. Basic Violet 3, C.I. Nr. 42 555 anstelle von C.I. Basic Violet 1, C.I. Nr. 42 535, zur Verlackung eingesetzt.

## Vergleichsbeispiel 6

Vergleichsbeispiel 5 wurde wiederholt, die Pigmentsuspension wurde jedoch eine Stunde bei 90°C statt bei 80°C gerührt.

## Beispiel 6

Es wurde wie im Beispiel 5 verfahren, jedoch wurden 38 Teile C.I. Basic Violet 3, C.I. Nr. 42 555 anstelle von C.I. Basic Violet 1, C.I. Nr. 42 535, zur Verlackung eingesetzt. Das Pigment weist gegenüber dem des Vergleichsbeispiels 5 die im Beispiel 1 angegebenen anwendungstechnischen Vorteile auf.

## Beispiel 7

Beispiel 5 wurde wiederholt, jedoch wurden anstelle des sauren Phosphorsäureesters 13 Teile Dodecylbenzolsulfonsäure zur Rohpigmentsuspension zugesetzt. Außerdem wurde anschließend eine Stunde bei 90°C statt bei 80°C nachgerührt. Das Pigment weist gegenüber dem des Vergleichsbeispiels 4 die im Beispiel 1 angegebenen anwendungstechnischen Vorteile auf.

## Beispiel 8

Beispiel 6 wurde wiederholt, es wurden jedoch 10 Teile des Umsetzungsproduktes aus Nonylphenol mit 10 EO anstelle des sauren Phosphorsäureesters verwendet. Außerdem wurde anschließend eine Stunde bei 90°C statt bei 80°C nachgerührt. Das Pigment weist gegenüber dem des Vergleichsbeispiels 6 die in Beispiel 1 angegebenen anwendungstechnischen Vorteile auf.

## Beispiel 9

Beispiel 5 wurde wiederholt, jedoch wurden 10 Teile des Umsetzungsproduktes aus Isodecanol und 7 EO anstelle des sauren Phosphorsäureesters verwendet. Außerdem wurde anschließend eine Stunde bei 90°C statt bei 80°C nachgerührt. Das Pigment weist gegenüber dem des Vergleichsbeispiels 4 die im Beispiel 1 angegebenen anwendungstechnischen Vorteile auf.

## Beispiel 10

Es wurde wie im Beispiel 5 verfahren, jedoch wurden anstelle des sauren Phosphorsäureesters 10 Teile eines sulfatisierten $C_{12}$- bis $C_{14}$-Alkohol-EO-Adduktes/Natriumsalz verwendet. Außerdem wurde die Pigmentsuspension anschließend eine Stunde bei 90°C statt bei 80°C nachgerührt. Das Pigment weist gegenüber dem des Vergleichsbeispiels 4 die im Beispiel 1 genannten anwendungstechnischen Vorteile auf.

## Beispiel 11

Es wurde wie im Beispiel 5 verfahren, jedoch wurden anstelle des sauren Phosphorsäureesters 6,8 Teile Dodecylbenzolsulfonsäure und 6,2 Teile N,N-Dimethyloctadecylamin verwendet. Außerdem wurde die Pigmentsuspension anschließend eine Stunde bei 90°C statt bei 80°C nachgerührt. Das Pigment weist gegenüber dem der Vergleichsbeispiele 4 die im Beispiel 1 angegebenen anwendungstechnischen Vorteile auf.

## Beispiel 12

Beispiel 5 wurde wiederholt, jedoch wurden anstelle des sauren Phosphorsäureesters 13 Teile β-Naphthol verwendet. Das Pigment weist gegenüber dem des Vergleichsbeispiels 4 die im Beispiel 1 angegebenen anwendungstechnischen Vorteile auf.

### Beispiel 13

Eine wäßrige Lösung von 38,6 Teilen C.I. Basic Blue 7, C.I. Nr. 42 595, in 2700 Teilen Wasser wurde mit einer in bekannter Weise hergestellten Heteropolysäure aus 4,96 Teilen Molybdänoxid, 35,16 Teilen Wolframoxid und Wasserglas aus 0,59 Teilen Siliciumdioxid in 380 Teilen Wasser versetzt, worauf das Pigment ausfiel. Dieser Suspension wurden 9,6 Teile eines sauren Phosphorsäureesters zugesetzt, der als Estergruppe ein Umsetzungsprodukt eines $C_{13}$- bis $C_{15}$-Oxoalkoholgemisches mit 6 Mol PO und dann mit 12 Mol EO je Mol Alkohol enthält. Nach einer Stunde Rühren bei 80°C wurden der Pigmentsuspension entsprechend den Angaben in der DE-OS 27 07 972 dann 1,74 Teile Ethylendiamintetraessigsäure/Natriumsalz und 8,3 Teile einer Emulsion, die aus 0,53 Teilen Ölsäureäthanolamid, 1,13 Teilen Normalparaffin $C_{13}$ - $C_{15}$ und 6,64 Teilen Wasser bei 60°C hergestellt wurde, zugegeben. Nach einer weiteren Stunde Rühren bei 80°C wurde das Pigment isoliert und bei 75°C im Umluftschrank getrocknet. Nach dem Mahlen wurde ein dispergierweiches Pulver erhalten, das die in Beispiel 1 angegebenen anwendungstechnischen Eigenschaften aufweist. Im Vergleich zum Pigment des Vergleichsbeispiels 7 gibt das erfindungsgemäße Verfahren Färbungen mit höherem Glanz und höherer Lasur.

### Vergleichsbeispiel 7

Zu einer wäßrigen Lösung von 38,6 Teilen C.I. Basic Blue 7, C.I. Nr. 42 595, in 2700 Teilen Wasser wurde eine in bekannter Weise hergestellte Heteropolysäure aus 4,96 Teilen Molybdänoxid, 35,16 Teilen Wolframoxid und Wasserglas aus 0,59 Teilen Siliciumdioxid in 380 Teilen Wasser gegeben, worauf das Pigment ausfiel. Die Pigmentsuspension wurde 15 Minuten nachgerührt und mit 1,74 Teilen Ethylendiamintetraessigsäure/Natriumsalz und 8,3 Teilen einer Emulsion, die aus 0,53 Teilen Ölsäurenäthanolamid, 1,13 Teilen Normalparaffin $C_{13}$ - $C_{15}$ und 6,64 Teilen Wasser bei 60°C hergestellt wurde, versetzt. Das Pigment wurde nach einer Stunde Rühren isoliert, bei 75°C im Umluftschrank getrocknet und gemahlen.

### Beispiel 14

Eine Mischung aus 55,35 Teilen C.I. Basic Red 1, C.I. Nr. 45 160, und 1,0 Teilen C.I. Basic Violet 11, C.I. Nr. 45 175 in 2000 Teilen Wasser wurde mit einer in bekannter Weise hergestellten Phosphormolybdänsäure aus 48,51 Teilen Molybdänoxid und 4,34 Teilen Dinatriumphosphat in 945 Teilen Wasser versetzt, worauf das Pigment ausfiel. Der Pigmentsuspension wurde ein Gemisch aus 7,19 Teilen Triisobutylphosphat, 2,29 Teilen des Anlagerungsproduktes von 20 Mol EO an 1 Mol i-Nonylphenol und 0,52 Teilen des Anlagerungsproduktes von 5 Mol EO an 1 Mol i-Decanol zugesetzt. Nach einer Stunde Rühren bei 70°C wurden der Suspension 8,3 Teile einer Emulsion, die aus 0,53 Teilen Ölsäureäthanolamid, 1,13 Teilen Normalparaffin $C_{13}$ - $C_{15}$ und 6,64 Teilen Wasser bei 60°C hergestellt wurde, zugegeben und die Suspension noch eine weitere Stunde bei 70°C gerührt. Dann wurde das Pigment isoliert und bei 75°C im Umluftschrank getrocknet. Das erhaltene Pigment gibt im Vergleich zu dem des Vergleichsbeispiels 8 Färbungen und Drucke mit höherem Glanz und höherer Lasur.

### Vergleichsbeispiel 8

Zu einer Mischung aus 55,35 Teilen C.I. Basic Red 1, C.I. Nr. 45 160, und 1,0 Teilen C.I. Basic Violet 11, C.I. Nr. 45 175 in 2000 Teilen Wasser wurde eine in bekannter Weise hergestellte Phosphormolybdänsäure aus 48,51 Teilen Molybdänoxid und 4,34 Teilen Dinatriumphosphat in 945 Teilen Wasser gegeben, worauf das Pigment ausfiel. Die Suspension wurde 15 Minuten bei 70°C gerührt und dann mit 8,3 Teilen einer Emulsion, die aus 0,53 Teilen Ölsäureäthanolamid, 1,13 Teilen Normalparaffin $C_{13}$ - $C_{15}$ und 6,64 Teilen Wasser bei 60°C hergestellt wurde, versetzt. Das Pigment wurde nach einer weiteren Stunde Rühren bei 70°C isoliert, bei 75°C im Umluftschrank getrocknet und gemahlen.

### Beispiel 15

Eine wäßrige Lösung von 38,6 Teilen C.I. Basic Blue 7, C.I. Nr. 42 595, in 2700 Teilen Wasser wurde mit einer in bekannter Weise hergestellten Phosphormolybdänsäurelösung aus 27,0 Teilen Molybdänoxid und 2,55 Teilen Dinatriumphosphat in 255 Teilen Wasser versetzt, worauf das Pigment ausfiel. Dieser Suspension wurden 9,6 Teile eines sauren Phosphorsäureesters zugesetzt, der als Estergruppe ein Umsetzungsprodukt eines $C_{13}$- bis $C_{15}$-Oxoalkoholgemisches mit 6 Mol PO und dann mit 12 Mol EO je Mol Alkohol enthält. Nach einer Stunde Rühren bei 70°C wurde das Pigment isoliert und bei 75°C im Umluftschrank getrocknet. Nach dem Mahlen erhielt man ein dispergierweiches Pulver, das bei der Einarbeitung in einen Offsetfirnis eine Druckfarbe mit einer besseren Kornfeinheit und einer höheren Fließfähigkeit als das nach Vergleichsbeispiel 9 hergestellte Pigment liefert. Beim Anreiben des erfindungsgemäß hergestellten Pigments in einem Nitrolack (14 Teile Nitrocellulose und 3,5 Teile Phthalsäure-di-n-butylester gelöst in 20 Teilen Essigester und 62,5 Teilen Ethanol) erhält man eine Druckfarbe, die auf Aluminium-bzw. Acetatfolie Färbungen mit höherem Glanz und höherer Lasur ergibt als eine Farbe, die das Pigment des Vergleichsbeispiels 9 enthält.

Vergleichsbeispiel 9

Eine wäßrige Lösung von 38,6 Teilen C.I. Basic Blue 7, C.I. Nr. 42 595, in 2700 Teilen Wasser wurde mit einer in bekannter Weise hergestellten wäßrigen Heteropolysäurelösung aus 27,0 Teilen Molybdänoxid und 2,55 Teilen Dinatriumphosphat in 255 Teilen Wasser verlackt. Nach einer Stunde Rühren bei 70 °C wurde das Pigment isoliert, bei 75 °C im Umluftschrank getrocknet und gemahlen.

Beispiel 16

Ein Gemisch aus 9,6 Teilen eines sauren Phosphorsäureesters, der als Estergruppe ein Umsetzungsprodukt eines $C_{13}$- bis $C_{15}$-Oxoalkoholgemisches mit 6 Mol PO und dann mit 12 Mol EO je Mol Alkohol enthält, und 38,6 Teilen C.I. Basic Blue 7, C.I. Nr. 42 595, in 2700 Teilen Wasser wurde mit einer in bekannter Weise hergestellten Phosphormolybdänsäurelösung aus 27,0 Teilen Molybdänoxid und 2,55 Teilen Dinatriumphosphat in 255 Teilen Wasser versetzt, worauf das Pigment ausfiel. Nach einer Stunde Rühren bei 70 °C wurde das Pigment isoliert und bei 75 °C im Umluftschrank getrocknet. Nach dem Mahlen erhielt man ein dispergierweiches Pigment, das gegenüber dem Pigment des Vergleichsbeispiels 9 die im Beispiel 1 angegebenen anwendungstechnischen Vorteile aufweist.

Beispiel 17

Ein Gemisch aus 38 Teilen Basic Violet 1, C.I. Nr. 42 535, und 15 Teilen N,N-Dimethyloctadecylamin in 2800 Teilen Wasser wurde mit einer in bekannter Weise hergestellten Heteropolysäurelösung aus 51,6 Teilen Molybdänoxid und 4,88 Teilen Dinatriumphosphat in 497 Teilen Wasser versetzt, worauf das Pigment ausfiel. Nach einer Stunde Rühren bei 90 °C wurden der Pigmentsuspension entsprechend den Angaben in der DE-OS 27 07 972 2 Teile Ethylendiamintetraessigsäure/Natriumsalz und 16 Teile einer Emulsion, die aus 1,02 Teilen Ölsäureethanolamid, 2,18 Teilen Normalparaffin $C_{13}$ - $C_{15}$

und 12,8 Teilen Wasser bei 60 °C hergestellt wurde, zugegeben. Es wurde noch eine Stunde nachgerührt und dann das Pigment isoliert und bei 75 °C im Umluftschrank getrocknet. Das erhaltene Pigment weist gegenüber dem des Vergleichsbeispiels 4 die im Beispiel 1 angegebenen anwendungstechnischen Vorteile auf.

Beispiel 18

Eine Lösung von 38 Teilen Basic Violet 1, C.I. Nr. 42 535, in 2800 Teilen Wasser wurde mit einem Gemisch aus 15 Teilen Dodecylbenzolsulfonsäure und einer in bekannter Weise hergestellten Heteropolysäurelösung aus 33,2 Teilen Molybdänoxid und 3,14 Teilen Dinatriumphosphat in 320 Teilen Wasser versetzt, worauf das Pigment ausfiel. Die Pigmentsuspension wurde eine Stunde bei 90 °C gerührt und dann entsprechend den Angaben in der DE-OS 27 07 972 mit 2 Teilen Ethylendiamintetraessigsäure/Natriumsalz und 16 Teilen einer Emulsion, die aus 1,02 Teilen Ölsäureethanolamid, 2,18 Teilen Normalparaffin $C_{13}$ - $C_{15}$ und 12,8 Teilen Wasser bei 60 °C hergestellt wurde, versetzt. Es wurde noch eine Stunde gerührt und dann das Pigment isoliert und bei 75 °C in Umluftschrank getrocknet. Das erhaltene Pigment weist gegenüber dem des Vergleichsbeispiels 4 die im Beispiel 1 angegebenen anwendungstechnischen Vorteile auf.

Beispiel 19

Es wurde wie im Beispiel 18 verfahren, jedoch wurden statt der Dodecylbenzolsulfonsäure 15 Teile eines sulfierten $C_{12}$-$C_{14}$-Alkohol-EO-Adduktes/Natriumsalz verwendet. Das erhaltene Pigment weist gegenüber dem des Vergleichsbeispiels 4 die im Beispiel 1 angegebenen anwendungstechnischen Vorteile auf.

**Patentansprüche**

1. Verfahren zur Herstellung von anwendungstechnisch verbesserten Verlackungsprodukten aus basischen Farbstoffen und Heteropolysäuren auf der Basis Phosphor-, Molybdän-, Wolfram- und/oder Kieselsäure durch Nachbehandeln der bei der Verlackung erhaltenen Rohpigmente in wäßriger Suspension in der Wärme, dadurch gekennzeichnet, daß man dem wäßrigen Gemisch vor, während oder nach der Verlackung

(1) primäre, sekundäre oder tertiäre aliphatische Amine, die mindestens ein $C_{10}$- bis $C_{20}$-Alkyl und/oder $C_8$- bis $C_{20}$-Alkoxy-$C_2$- bis -$C_4$-alkyl tragen,

(2) N-$C_8$- bis $C_{20}$-Alkylamino-$C_2$- bis -$C_8$-

alkansäuren,

(3) Diaryl- oder Triarylamine,

(4) saure oder neutrale Phosphorsäureester auf der Basis Fettalkohol, Fettalkoholalkoxylat, Polypropylenglykol, Polyethylenglykol oder Blockcopolymeren aus Propylenoxid und Ethylenoxid,

(5) Schwefelsäurehalbester auf der Basis von $C_{10}$- bis $C_{20}$-Fettalkoholen, Fettalkoholethylenoxidaddukten oder $C_5$- bis $C_{20}$-Alkylphenolethylenoxidaddukten,

(6) $C_8$- bis $C_{20}$-Alkan- oder Alkensulfonsäuren, $C_6$- bis $C_{20}$-Alkylbenzolsulfonsäuren oder Di-$C_6$- bis $C_{20}$-Alkylsulfimide.

(7) Ethylenoxidaddukte von $C_1$- bis $C_{20}$-Alkylphenolen, $C_8$- bis $C_{20}$-Alkanolen oder $C_{10}$- bis $C_{20}$-Alkylaminen, wobei die Addukte mindestens 5 Ethylenoxidreste enthalten,

(8) Propylenglykole oder Blockcopolymere auf der Basis von Alkandiolen oder -polyolen mit 2 bis 8 C-Atomen mit Propylenoxid und Ethylenoxid,

(9) Naphthole oder $C_1$- bis $C_{20}$-Alkylphenole oder Gemische dieser Mittel zugibt und das Rohpigment in der wäßrigen Suspension bei pH 2 bis 5 auf Temperaturen von 50° bis 100°C erwärmt.

2.  Verfahren gemäß Anspruch 1, dadurch gekennzeichnet, daß man - bezogen auf den zur Verlackung verwendeten Farbstoff - 5 bis 50 Gew.-% der unter (1) bis (9) genannten Mittel oder Gemische davon anwendet.

3.  Verfahren gemäß Anspruch 1, dadurch gekennzeichnet, daß man - bezogen auf den zur Verlackung verwendeten Farbstoff - 10 bis 45 Gew.-% der unter (1) bis (9) genannten Mittel anwendet.

4.  Verfahren gemäß Anspruch 1, 2 oder 3, dadurch gekennzeichnet, daß die Wärmebehandlung des Rohpigments in Gegenwart von

(1.1) $C_{10}$- bis $C_{20}$-Alkylaminen, oder von 3-($C_8$- bis $C_{20}$-Alkoxy)-propylaminen, wobei die N-Atome der Amine gegebenenfalls durch $C_1$- bis $C_4$-Alkyl 1- oder 2-fach substituiert sind,

(2.1) N-$C_{10}$- bis $C_{20}$Alkylamino-$C_2$- bis $C_8$-alkansäuren,

(4.1) a) neutralen Phosphorsäureestern auf der Basis von $C_3$- bis $C_{18}$-Alkanolen im Gemisch mit nichtionischen Ethylenoxidaddukten der Gruppe (7),

b) sauren Phosphorsäureestern auf der Basis von Ethylenoxid- oder von Propylenoxid-Ethylenoxid-Addukten an $C_{10}$- bis $C_{20}$-Alkanolen,

(5.1) Schwefelsäurehalbestern von Ethylenoxidaddukten an $C_{10}$- bis $C_{20}$-Alkylphenolen, wobei die Addukte im Mittel 2 bis 6 EO je Mol enthalten,

(6.1) $C_8$- bis $C_{20}$-Alkylbenzolsulfonsäuren,

(7.1) Ethylenoxidaddukten an $C_6$- bis $C_{20}$-Alkylphenolen oder $C_8$- bis $C_{20}$-Alkanolen mit 5 bis 55 Mol EO je Mol Phenol bzw. Alkanol

oder Gemischen dieser Mittel erfolgt.

5.  Verfahren gemäß Anspruch 1, 2 oder 3, dadurch gekennzeichnet, daß die Wärmebehandlung des Rohpigments in Gegenwart von

(1.2) $C_{14}$- bis $C_{20}$-Alkylaminen oder 3-($C_{10}$- bis $C_{20}$-Alkoxy)-propylaminen, bei denen die N-Atome gegebenenfalls durch $C_1$- bis $C_4$-Alkyl ein- oder zweifach substituiert sind,

(2.2) β-(N-$C_{10}$- bis $C_{20}$-Alkylamino)-buttersäuren,

(4.2) a) neutralen Phosphorsäureestern auf der Basis von $C_3$- bis $C_{18}$-Alkanolen im Gemisch mit Ethylenoxidaddukten an $C_6$- bis $C_{20}$-Alkylphenolen oder $C_8$- bis $C_{20}$-Alkanolen mit 5 bis 55 Mol EO je Mol Phenol/Alkanol,

(4.2) b) sauren Phosphorsäureestern auf der Basis von Ethylenoxid- oder Propylenoxid-Ethylenoxid-Addukten an $C_{10}$- bis $C_{20}$-Alkanolen,

(5.2) Schwefelsäurehalbestern von Ethylenoxidaddukten an $C_{10}$- bis $C_{20}$-Alkanolen oder $C_6$- bis $C_{20}$-Alkylphenolen, wobei die Addukte im Mittel 2 bis 6 EO je Mol Alkanol/Phenol enthalten,

(6.2) $C_8$- bis $C_{20}$-Alkylbenzolsulfonsäuren,

(7.2) Ethylenoxidaddukten an $C_6$- bis $C_{20}$-Alkylphenolen oder $C_8$- bis $C_{20}$-Alkanolen, wobei die Addukte 5 bis 55 Mol EO je Mol Phenol/Alkanol enthalten,

(10) Gemischen aus den unter (4.2.b) genannten Phosphorsäureestern mit $C_{10}$- bis $C_{20}$-Alkylaminen oder 3-($C_8$- bis $C_{20}$-Alkoxy)-propylaminen, wobei die Aminogruppe gegebenenfalls durch $C_1$- bis $C_4$-Alkyl ein- oder zweifach substituiert ist, oder

(11) Gemischen aus den unter (6.2) genannten Alkylbenzolsulfonsäuren mit $C_{10}$- bis $C_{20}$-Alkylaminen oder 3-($C_8$- bis $C_{20}$-Alkoxy)-propylaminen, wobei die Aminogruppe gegebenenfalls durch $C_1$- bis $C_4$-Alkyl ein- oder zweifach substituiert ist,

erfolgt.

6.  Verfahren gemäß Anspruch 1 bis 5, dadurch gekennzeichnet, daß man die Mittel (1) bis (11) in Form einer Lösung oder Suspension anwendet.

7. Verfahren gemäß Anspruch 1 bis 6, dadurch gekennzeichnet, daß man die Mittel (1) bis (11) zu der wäßrigen Suspension des Rohpigments gibt, das Gemisch unter Durchmischen bei pH 2 bis 5 auf 50 bis 100°C erwärmt und dann das Pigment isoliert.

8. Pigmente aus mit Heteropolysäuren verlackten basischen Farbstoffen, erhalten nach dem Verfahren gemäß den Ansprüchen 1 bis 7.

9. Verwendung der Pigmente gemäß Anspruch 8 zur Herstellung von Offsetdruckfarben und von Nitrocellulose enthaltenden Druckfarben.

**Claims**

1. A process for the preparation of a lake which has improved performance characteristics and is obtained from a basic dye and a heteropolyacid based on phosphoric acid, molybdic acid, tungstic acid or silicic acid by aftertreating the crude pigment obtained during the laking procedure, in aqueous suspension and at elevated temperatures, wherein
    (1) primary, secondary or tertiary aliphatic amines which carry one or more $C_{10}$-$C_{20}$-alkyl and/or $C_8$-$C_{20}$-alkoxy-$C_2$-$C_4$-alkyl groups,
    (2) N-$C_8$-$C_{20}$-alkylamino-$C_2$-$C_8$-alkanoic acids,
    (3) diaryl- or triarylamines,
    (4) acidic or neutral phosphates based on a fatty alcohol, a fatty alcohol oxyalkylate, polypropylene glycol, polyethylene glycol or block copolymers of propylene oxide and ethylene oxide,
    (5) sulfuric acid half esters based on $C_{10}$-$C_{20}$-fatty alcohols, fatty alcohol/ethylene oxide adducts or $C_5$-$C_{20}$-alkylphenol/ethylene oxide adducts,
    (6) $C_8$-$C_{20}$alkane- or alkenesulfonic acids, $C_6$-$C_{20}$-alkylbenzenesulfonic acids or di-$C_6$-$C_{20}$-alkylsulfimides,
    (7) ethylene oxide adducts of $C_1$-$C_{20}$-alkylphenols, $C_8$-$C_{20}$-alkanols or $C_{10}$-$C_{20}$-alkylamines, the adducts containing not less than 5 ethylene oxide radicals,
    (8) propylene glycols or block copolymers based on alkanediols or -polyols of 2 to 8 carbon atoms with propylene oxide and ethylene oxide, and
    (9) naphthols or $C_1$-$C_{20}$-alkylphenols, or mixtures of these agents are added to the aqueous mixture before, during or after the laking procedure, and
    the crude pigment in the aqueous suspension is heated to 50-100°C at pH 2-5.

2. A process as claimed in claim 1, wherein from 5 to 50% by weight, based on the dye used for the laking procedure, of one of the agents stated under (1) to (9), or of a mixture of these, is used.

3. A process as claimed in claim 1, wherein from 10 to 45% by weight, based on the dye used for the laking procedure, of the agents stated under (1) to (9) is used.

4. A process as claimed in claim 1, 2 or 3, wherein the heat treatment of the crude pigment is carried out in the presence of
    (1.1) a $C_{10}$-$C_{20}$-alkylamine or a 3-($C_8$-$C_{20}$-alkoxy)-propylamine, where the N atoms of the amines may be mono- or disubstituted by $C_1$-$C_4$-alkyl,
    (2.1) an N-$C_{10}$-$C_{20}$-alkylamino-$C_2$-$C_8$-alkanoic acid,
    (4.1)a) a neutral phosphate based on a $C_3$-$C_{18}$-alkanol, as a mixture with nonionic ethylene oxide adducts of group (7),
    b) an acidic phosphate based on an adduct of ethylene oxide or of propylene oxide/ethylene oxide with a $C_{10}$-$C_{20}$-alkanol,
    (5.1) a sulfuric acid half ester of an adduct of ethylene oxide with a $C_{10}$-$C_{20}$-alkylphenol, the adduct containing on average from 2 to 6 moles of ethylene oxide per mole,
    (6.1) a $C_8$-$C_{20}$-alkylbenzenesulfonic acid,
    (7.1) an adduct of ethylene oxide with a $C_6$-$C_{20}$-alkylphenol or a $C_8$-$C_{20}$-alkanol, containing from 5 to 55 moles of ethylene oxide per mole of phenol or alkanol, or a mixture of these agents.

5. A process as claimed in claim 1, 2 or 3, wherein the heat treatment of the crude pigment is carried out in the presence of
    (1.2) a $C_{14}$-$C_{20}$-alkylamine or a 3-($C_{10}$-$C_{20}$-alkoxy)-propylamine, where the N atoms may be mono- or disubstituted by $C_1$-$C_4$-alkyl,
    (2.2) a $\beta$-(N-$C_{10}$-$C_{20}$-alkylamino)-butyric acid,
    (4.2)a) a neutral phosphate based on a $C_3$-$C_{18}$-alkanol, as a mixture with an adduct of ethylene oxide with a $C_6$-$C_{20}$-alkylphenol or a $C_8$-$C_{20}$-alkanol, containing from 5 to 55 moles of ethylene oxide per mole of phenol or alkanol,
    (4.2)b) an acidic phosphate based on an adduct of ethylene oxide or of propylene oxide/ethylene oxide with a $C_{10}$-$C_{20}$-alkanol,
    (5.2) a sulfuric acid half ester of an adduct of ethylene oxide with a $C_{10}$-$C_{20}$-alkanol or

a $C_6$-$C_{20}$-alkylphenol, the adduct containing on average from 2 to 6 moles of ethylene oxide per mole of alkanol or phenol,

(6.2) a $C_8$-$C_{20}$-alkylbenzenesulfonic acid,

(7.2) an adduct of ethylene oxide with a $C_6$-$C_{20}$-alkylphenol or a $C_8$-$C_{20}$-alkanol, the adduct containing from 5 to 55 moles of ethylene oxide per mole of phenol or alkanol,

(10) a mixture of the phosphates stated under (4.2.b) with a $C_{10}$-$C_{20}$-alkylamine or a 3-($C_8$-$C_{20}$-alkoxy)-propylamine, where the amino group may be mono- or disubstituted by $C_1$-$C_4$-alkyl, or

(11) a mixture of an alkylbenzenesulfonic acid stated under (6.2) with a $C_{10}$-$C_{20}$-alkylamine or a 3-($C_8$-$C_{20}$-alkoxy)-propylamine, where the amino group may be mono- or disubstituted by $C_1$-$C_4$-alkyl.

6. A process as claimed in any of claims 1 to 5, wherein the agents (1) to (11) are used in the form of a solution or suspension.

7. A process as claimed in any of claims 1 to 6, wherein the agents (1) to (11) are added to an aqueous suspension of the crude pigment, the mixture is heated to 50-100°C at pH 2-5 with thorough mixing, and the pigment is then isolated.

8. A pigment which consists of a basic dye converted to a lake with a heteropolyacid and is obtained by a process as claimed in any of claims 1 to 7.

9. Use of a pigment as claimed in claim 8 for the production of offset printing inks and printing inks containing nitrocellulose.

## Revendications

1. Procédé de fabrication de produits pigmentaires d'exploitation industrielle améliorée, à partir de colorants basiques et d'hétéropolyacides à base d'acide phosphorique, molybdique, tungstique et/ou silicique, par post-traitement ou traitement ultérieur des pigments bruts obtenus au cours de la fabrication des pigments, en suspension aqueuse, à chaud, caractérisé en ce que l'on ajoute au mélange aqueux, avant, pendant ou après la formation des pigments,

(1) des amines aliphatiques, primaires, secondaires ou tertiaires, qui portent au moins un radical alkyle en $C_{10}$ à $C_{20}$ et/ou radical alcoxy($C_8$-$C_{20}$)-alkyle($C_2$-$C_4$),

(2) des acides N-alkylamino($C_8$-$C_{20}$)-alcanoîques($C_2$-$C_8$),

(3) des diaryl- ou triarylamines,

(4) des esters de l'acide phosphorique acides ou neutres, à base d'alcools aliphatiques, d'alcoolates d'alcools aliphatiques, de polypropylèneglycol, de polyéthylèneglycol, ou de copolymères à blocs d'oxyde de propylène et d'oxyde d'éthylène,

(5) des hémi-esters de l'acide sulfurique à base d'alcools aliphatiques en $C_{10}$ à $C_{20}$, d'adducts d'alcools aliphatiques et d'oxyde d'éthylène, ou d'adducts d'oxyde d'éthylène et d'alkyl($C_5$-$C_{20}$)-phénols,

(6) des acides alcane($C_8$ à $C_{20}$)-sulfoniques ou alcène($C_8$-$C_{20}$)-sulfoniques, des acides alkyl($C_6$-$C_{20}$)-benzènesulfoniques, ou des dialkyl($C_6$-$C_{20}$)sulfimides,

(7) des adducts d'oxyde d'éthylène d'alkyl-($C_1$-$C_{20}$)-phénols, d'alcanols en $C_8$-$C_{20}$ ou d'alkyl($C_{10}$-$C_{20}$)-amines, où les adducts contiennent au moins 5 restes ou unités oxyde d'éthylène,

(8) des propylèneglycols ou des copolymères à blocs, à base d'alcanediols ou -polyols qui comportent de 2 à 8 atomes de carbone, avec l'oxyde de propylène et l'oxyde d'éthylène

(9) des naphtols, ou des alkyl($C_1$-$C_{20}$)-phénols,

ou des mélanges de ces produits et on chauffe le pigment brut dans la suspension aqueuse jusqu'à des températures de 50 à 100°C, à un pH de 2 à 5.

2. Procédé suivant la revendication 1, caractérisé en ce que l'on utilise - par rapport au colorant employé pour la préparation des pigments - de 5 à 50% en poids des produits cités sous (1) à (9) ou de mélanges de ceux-ci.

3. Procédé suivant la revendication 1, caractérisé en ce que l'on utilise - par rapport au colorant employé pour la préparation du pigment - de 10 à 45% en poids des agents cités sous (1) à (9).

4. Procédé suivant la revendication 1, 2 ou 3, caractérisé en ce que le traitement à chaud du pigment brut s'effectue en présence

(1.1) d'alkylamines en $C_{10}$ à $C_{20}$, ou de 3-(alcoxy en $C_8$ à $C_{20}$)-propylamines, où les atomes d'azote des amines sont éventuellement monosubstitués ou disubstitués par des radicaux alkyle en $C_1$ à $C_4$,

(2.1) des acides N-alkylamino($C_{10}$-$C_{20}$)-alcanoîques($C_2$-$C_8$),

(4.1) a) des esters de l'acide phosphorique, neutres, à base d'alcanols en $C_3$ à $C_{18}$, en mélange à des adducts d'oxyde d'éthylène, non ioniques, du groupe (7),

b) des esters de l'acide phosphorique, acides, à base d'adducts d'oxyde d'éthylène ou d'oxyde de propylèneoxyde d'éthylène d'alcanols en $C_{10}$ à $C_{20}$,

(5.1) d'hémi-esters de l'acide sulfurique d'adducts de l'oxyde d'éthylène et d'alkyl-($C_{10}$-$C_{20}$)-phénols, où les adducts contiennent, en moyenne, 2 à 6 unités EO par mole,

(6.1) des acides alkyl($C_8$-$C_{20}$)-benzènesulfoniques,

(7.1) des adducts d'oxyde d'éthylène et d'alkyl($C_6$-$C_{20}$)-phénols ou d'alcanols en $C_8$ à $C_{20}$, avec de 5 à 55 moles d'EO par mole de phénol ou d'alcanol,

ou de mélanges de ces produits.

5. Procédé selon la revendication 1, 2 ou 3, caractérisé en ce que l'on réalise le traitement à chaud du pigment brut, en présence

(1.2) d'alkylamines en $C_{14}$ à $C_{20}$ ou de 3-alcoxy en $C_{10}$ à $C_{20}$)-propylamines, chez lesquelles les atomes d'azote sont éventuellement monosubstitués ou disubstitués par des radicaux alkyle en $C_1$ à $C_4$,

(2.2) d'acides $\beta$-(N-alkylamino en $C_{10}$ à $C_{20}$)-butyriques,

(4.2) a) d'esters de l'acide phosphorique, neutres, à base d'alcanols en $C_3$ à $C_{18}$, en mélange à des adducts d'oxyde d'éthylène et d'alkyl($C_6$-$C_{20}$)-phénols, ou d'alcanols en $C_8$ à $C_{20}$, avec de 5 à 55 moles d'EO par mole de phénol/alcanol,

(4.2) b) d'esters de l'acide phosphorique, acides, à base d'adducts d'oxyde d'éthylène ou d'oxyde de propylène-oxyde d'éthylène et d'alcanols en $C_{10}$ à $C_{20}$,

(5.2) d'hémi-esters de l'acide sulfurique d'adducts de l'oxyde d'éthylène et d'alcanols en $C_{10}$ à $C_{20}$, ou d'alkyl($C_6$-$C_{20}$)-phénols, où les adducts contiennent, en moyenne, de 2 à 6 unités EO par mole d'alcanol/phénol,

(6.2) des acides alkyl($C_8$-$C_{20}$)-benzènesulfoniques,

(7.2) d'adducts d'oxyde d'éthylène et d'alkyl($C_6$-$C_{20}$)-phénols ou d'alcanols en $C_8$ à $C_{20}$, où les adducts contiennent de 5 à 55 moles d'EO par mole de phénol/alcanol.

(10) de mélanges des esters de l'acide phosphorique mentionnés sous (4.2.b) avec des alkylamines en $C_{10}$ à $C_{20}$, ou des 3-(alcoxy en $C_8$ à $C_{20}$)-propylamines, où le radical amino est éventuellement monosubstitué ou disubstitué par des radicaux alkyle en $C_1$ à $C_4$, ou

(11) de mélanges des acides alkylbenzènesulfoniques cités sous (6.2) avec des alkylamines en $C_{10}$ à $C_{20}$ ou des 3-(alcoxy en $C_8$ à $C_{20}$)-propylamines, où le radical amino est éventuellement mono ou disubstitué par des radicaux alkyle en $C_1$ à $C_4$.

6. Procédé suivant l'une quelconque des revendications 1 à 5, caractérisé en ce que l'on utilise les agents ou produits (1) à (11) sous la forme d'une solution ou d'une suspension.

7. Procédé suivant l'une quelconque des revendications 1 à 6, caractérisé en ce que l'on ajoute les produits ou agents (1) à (11) à la suspension aqueuse du pigment brut, on chauffe le mélange, sous agitation intime, jusqu'à une température de 50 à 100°C à un pH de 2 à 5 et on isole ensuite le pigment.

8. Pigment obtenu à partir de clorants basiques transformés en pigments avec des hétéropolyacides, obtenus par mise en oeuvre du procédé suivant l'une quelconque des revendications 1 à 7.

9. Utilisation des pigments selon la revendication 8, en vue de la fabrication d'encres pour l'impression offset et d'encres contenant de la nitrocellulose.